# EUROPEAN PATENT SPECIFICATION

(11) **EP 3 838 360 B1**
(45) Date of publication and mention of the grant of the patent: **05.06.2024**
(21) Application number: 19850178.5
(22) Date of filing: 09.08.2019
(51) Int. Cl.: A63H 17/395, A63H 30/02, A63H 33/08, G01B 7/00

(54) **TOY SYSTEM, CASING, SEPARATE TOY, SEPARATE TOY ASSESSING METHOD, AND PROGRAM**
SPIELZEUGSYSTEM, GEHÄUSE, SEPARATES SPIELZEUG, VERFAHREN ZUR BEWERTUNG VON SEPARATEM SPIELZEUG UND PROGRAMM
SYSTÈME DE JOUET, BOÎTIER, JOUET SÉPARÉ, PROCÉDÉ D'ÉVALUATION DE JOUET SÉPARÉ ET PROGRAMME

(30) Priority: 17.08.2018 JP 2018153624
(43) Date of publication of application: 23.06.2021
(73) Proprietor: Sony Interactive Entertainment Inc., Tokyo 108-0075 (JP)
(72) Inventor: TANAKA, Akichika, Tokyo 108-0075 (JP)
(74) Representative: Müller Hoffmann & Partner
(86) International application number: PCT/JP2019/031682
(87) International publication number: WO 2020/036147

(56) References cited:
- JP-A- H05 277 263
- JP-A- H10 201 946
- JP-A- H11 276 721
- JP-A- 2003 010 558
- JP-A- 2003 053 048
- JP-A- 2003 071 141
- JP-U- S60 160 896
- JP-U- S62 197 167
- US-A1- 2005 167 919
- US-A1- 2009 146 778
- US-A1- 2016 375 373
- US-A1- 2016 375 373
- Anonymous: "Sony toio. Programing Work Kit", GIGAZINE, 2 June 2017 (2017-06-02), XP055686679, Retrieved from the Internet: URL:https://gigazine.net/news/20170602-son y-toio-itts2017 [retrieved on 2019-08-26]

## Description

### [Technical Field]

The present invention relates to a toy system, a separate toy assessment method, and a program.

### [Background Art]

A wide variety of toy systems using separate toys together with a toy main body are proposed. It is conceivable that the separate toys may be figures such as animals, humans, and robots, and vehicles such as automobiles. The toy main body needs to determine a status, for example, by checking which separate toy is being currently played with by a player. It is conceivable that such determination may be made by using, for example, a mechanical structure, communication, or an optical sensor.

Disclosed in PTL 1 is a technology for mounting a separate toy on a carriage and identifying a type of the separate toy by using a near field communication (NFC) tag.

### [Citation List]

### [Patent Literature]

[PTL 1]
PCT Patent Publication No. WO2018/025467

Further technological background can be found in US 2005/167919 A1.

### [Summary]

### [Technical Problems]

In a case where a mechanical structure is used to identify a type of a separate toy, it is difficult to improve durability. In a case where communication or an optical sensor is used to identify a type of a separate toy, it is difficult to reduce cost.

The present invention has been made in view of the above circumstances. An objective of the present invention is to provide a lower cost, highly durable technology for determining a status of a separate toy.

### [Solution to Problems]

The invention provides a toy system according to claim 1, a toy assessment method according to claim 8 and a program according claim 9.

The present invention makes it possible to determine a status of a separate toy while reducing cost and providing high durability.

An embodiment of the present invention may be configured so that, in a case where a magnetic field having a magnitude equal to or greater than a threshold value and oriented in a predetermined direction is continuously detected for a predetermined period of time, the determination section determines that one of the separate toys has approached the magnetic sensor and determines which of the separate toys has approached the magnetic sensor.

An embodiment of the present invention may be configured so as to further include movement detection means for detecting whether or not the magnetic sensor is moving, in which, in a case where the magnetic sensor is moving, the determination section determines that one of the separate toys has approached the magnetic sensor and determines which of the separate toys has approached the magnetic sensor.

The magnetic sensor may be disposed on the casing to detect an orientation and a magnitude of a magnetic field. The determination section determines, based on an output from the magnetic sensor, that a separate toy separated from the casing in which magnetic field generation means for generating a magnetic field is mounted has come into contact with or approached the casing.

The present invention is also able to achieve low cost and provide high durability in a toy system capable of determining a status of a separate toy.

An embodiment of the present invention may be configured so that, in a case where the magnetic sensor detects a magnetic field having a magnitude equal to or greater than a predetermined first threshold value, the determination section determines that the separate toy has come into contact with the casing, and that, in a case where the magnetic sensor detects a magnetic field having a magnitude equal to or greater than a second threshold value which is smaller than the first threshold value, the determination section determines that the separate toy has approached the casing. The second threshold value may be greater than a value of a magnitude of geomagnetism detected by the magnetic sensor.

An embodiment of the present invention may be configured so that the determination section determines, based on the orientation of a magnetic field detected by the magnetic sensor, a direction of the separate toy when the separate comes into contact with or approaches the casing.

An embodiment of the present invention may be configured so that the determination section determines, based on changes in the magnitude of a magnetic field detected by the magnetic sensor, that the separate toy has rebounded after hitting the casing.

### [Brief Description of Drawings]

[FIG. 1]

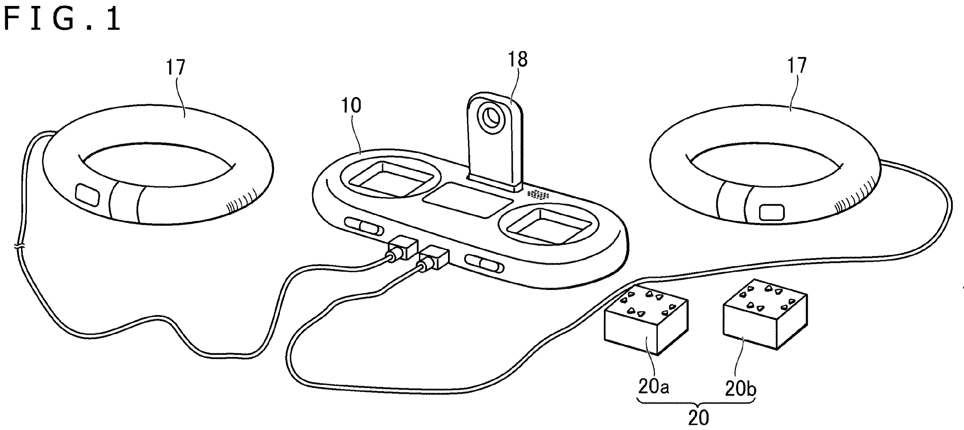

   FIG. 1 is a diagram illustrating an example of a toy system according to a first embodiment of the present invention.
[FIG. 2]

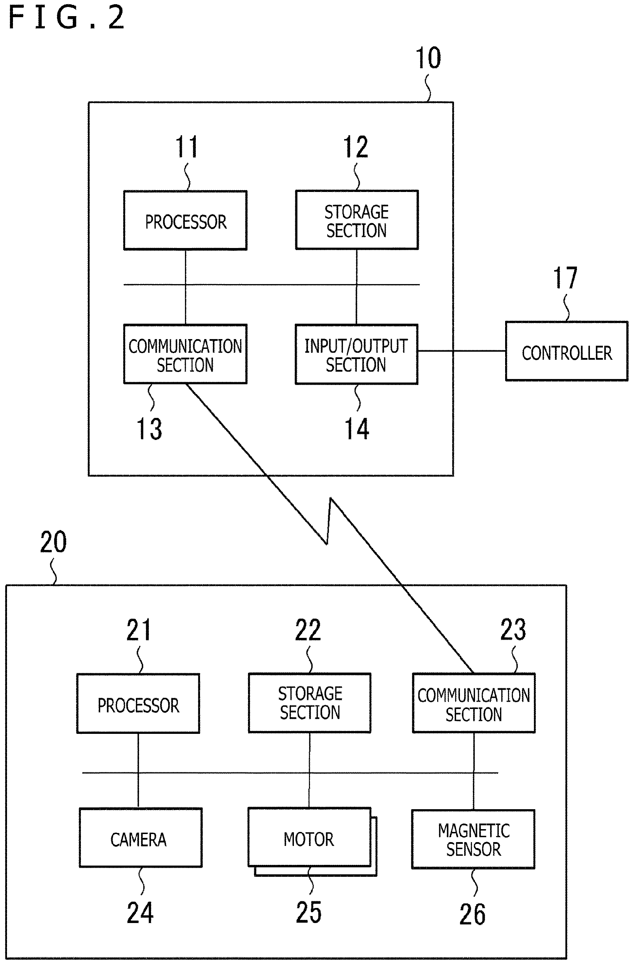

   FIG. 2 is a diagram illustrating a hardware configuration of the toy system.
[FIG. 3]

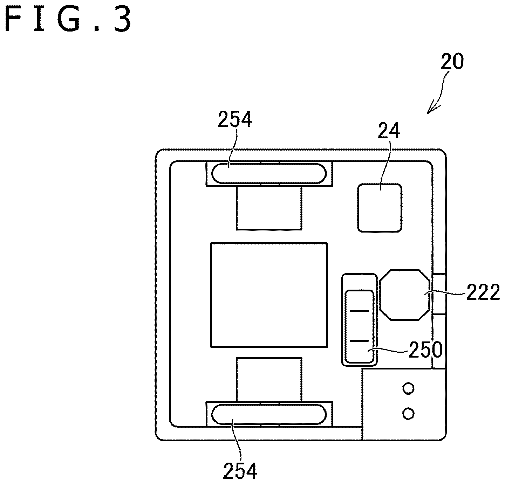

   FIG. 3 is a bottom view illustrating a carriage.
[FIG. 4]

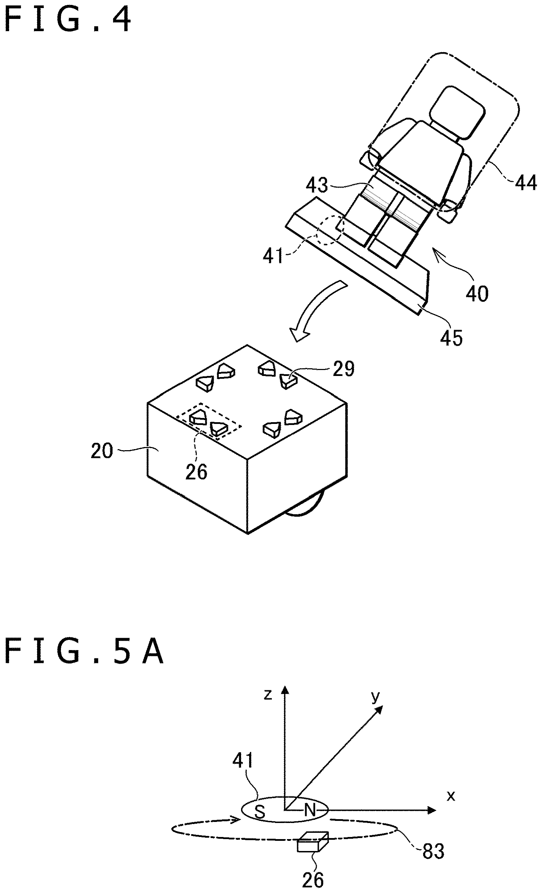

   FIG. 4 is a perspective view illustrating an example of an adjunct and the carriage.
[FIG. 5A]
   FIG. 5A is a diagram illustrating an example of a relation between a magnetic sensor and a magnetic field of a magnet.
[FIG. 5B]

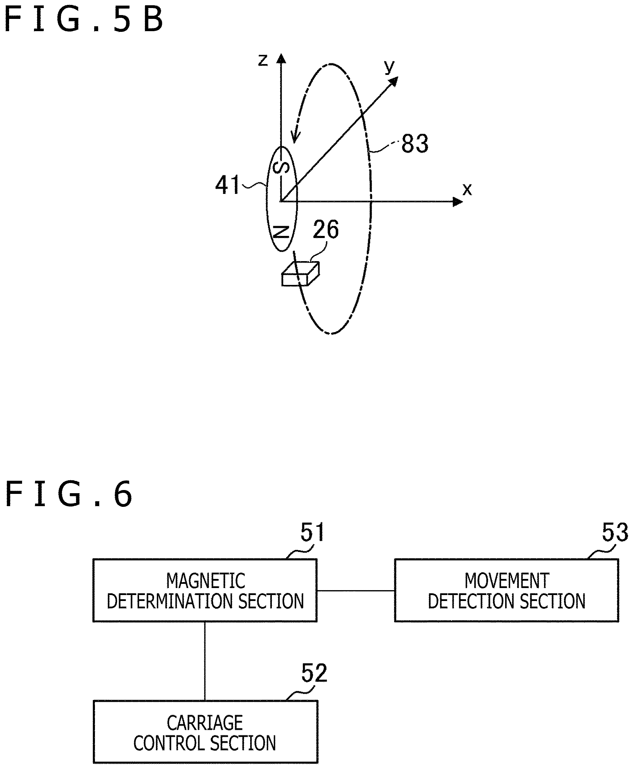

   FIG. 5B is a diagram illustrating another example of the relation between the magnetic sensor and the magnetic field of the magnet.
[FIG. 6]
   FIG. 6 is a block diagram illustrating functions implemented by the toy system.
[FIG. 7]

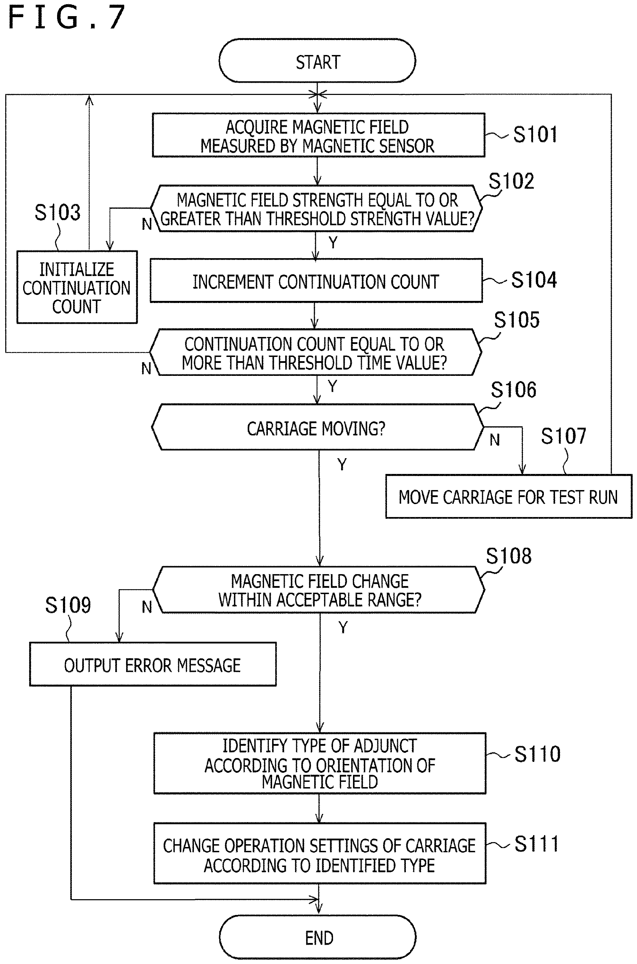

   FIG. 7 is a flowchart illustrating an example of processing performed by a magnetic determination section, a movement detection section, and a carriage control section.
[FIG. 8]

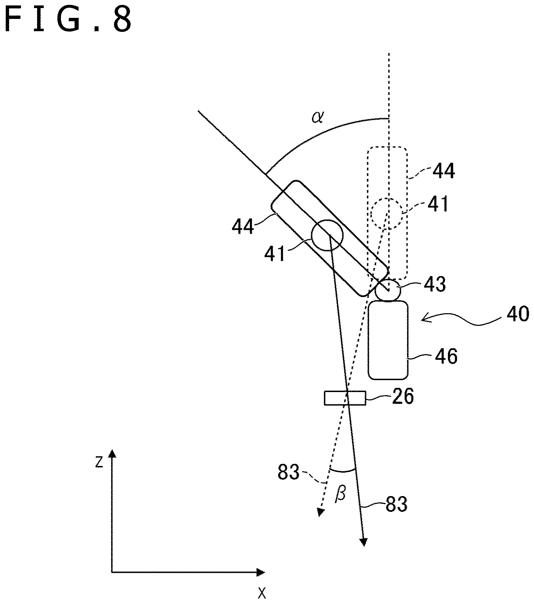

   FIG. 8 is a diagram illustrating an example of a relation between a magnetic sensor and a magnet of an adjunct according to a second embodiment.
[FIG. 9]

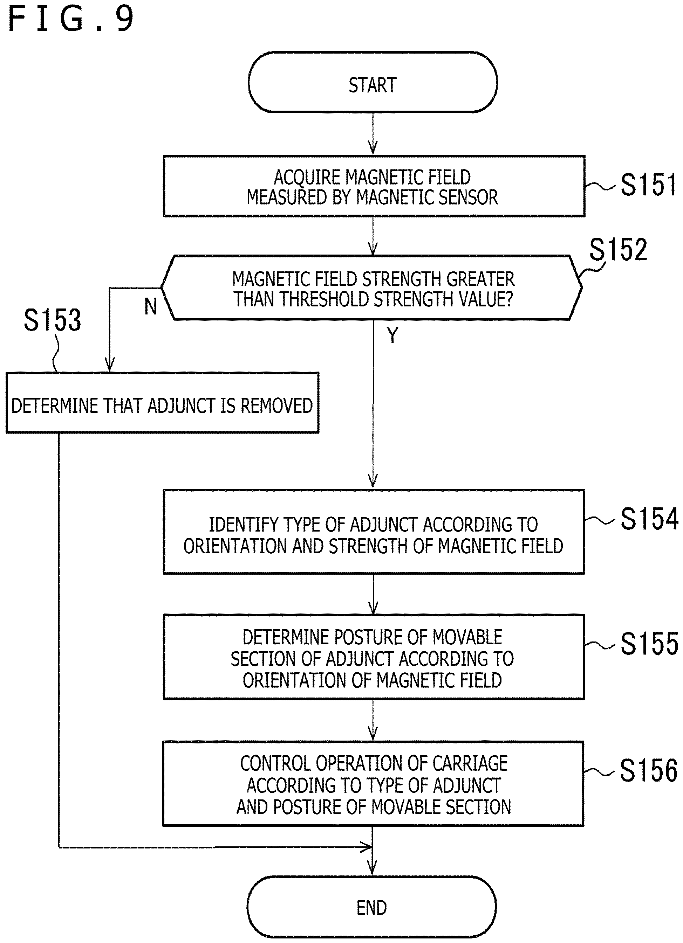

   FIG. 9 is a flowchart illustrating an example of processing performed by the magnetic determination section and the carriage control section.
[FIG. 10]

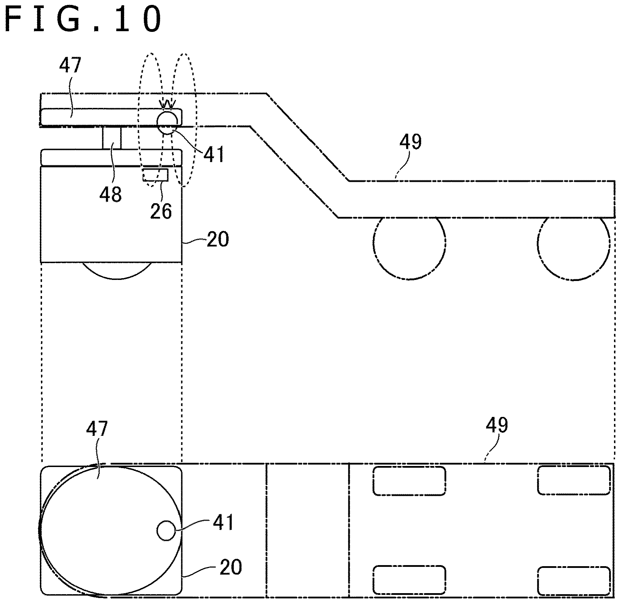

   FIG. 10 is a diagram illustrating another example of the adjunct and the carriage.
[FIG. 11]

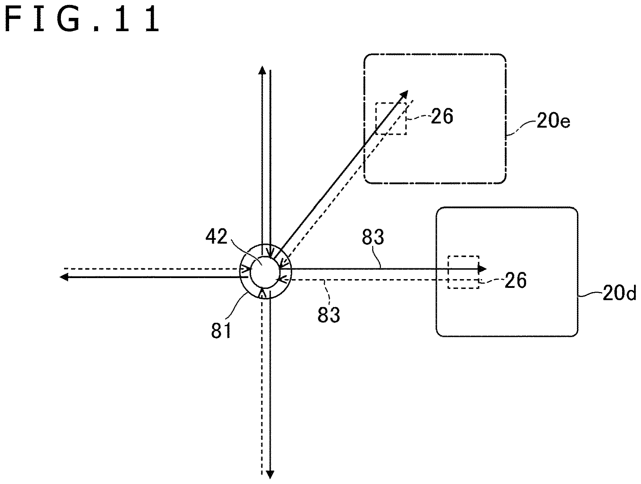

   FIG. 11 is a diagram illustrating an example of a relation between an external object and the carriage according to a third embodiment.
[FIG. 12]

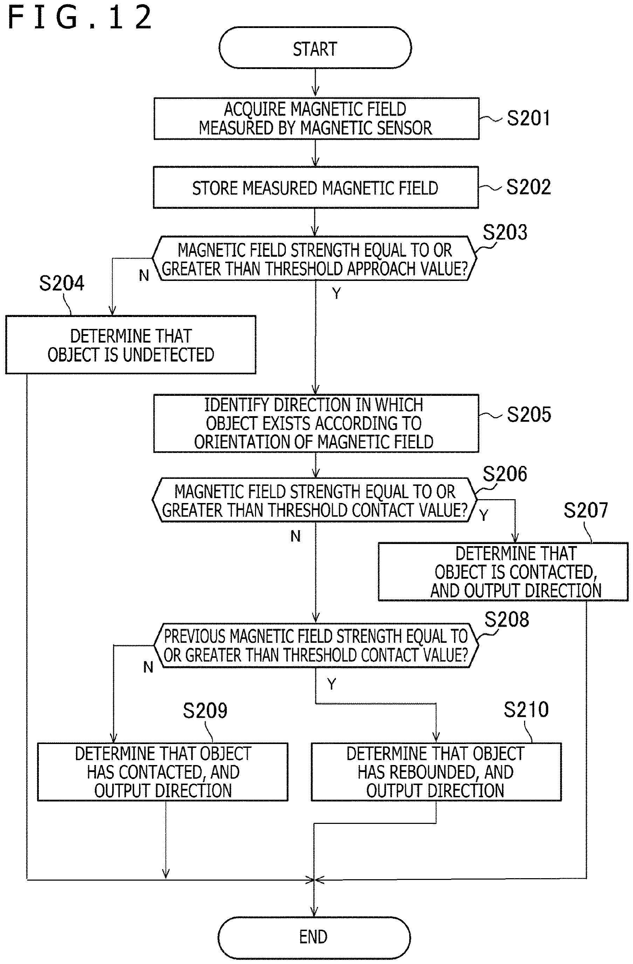

   FIG. 12 is a flowchart illustrating an example of processing performed by the magnetic determination section.
[FIG. 13]

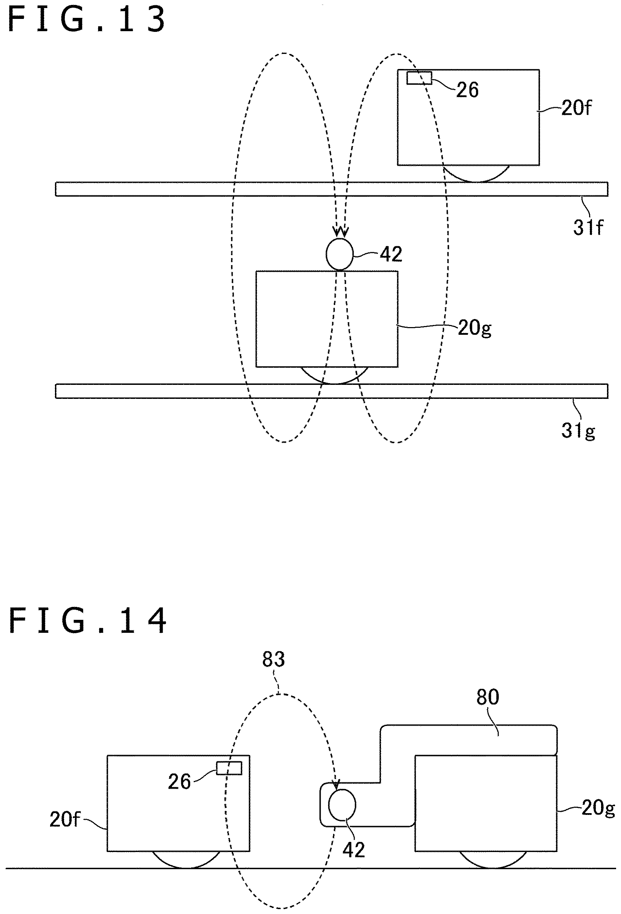

   FIG. 13 is a diagram illustrating an example of the carriage and another carriage.
[FIG. 14]
   FIG. 14 is a diagram illustrating another example of the carriage and another carriage.

### [Description of Embodiments]

Embodiments of the present invention will now be described with reference to the accompanying drawings. When elements appearing in this document have the same functions, they are designated by the same reference signs and will not be redundantly described.

### [First Embodiment]

Described in conjunction with a first embodiment of the present invention is a toy system that includes a self-propelled device and a separate toy mounted on the self-propelled device, and identifies a type of the separate toy.

FIG. 1 is a diagram illustrating an example of the toy system according to an embodiment of the present invention. FIG. 2 is a diagram illustrating an example of a hardware configuration of the toy system according to an embodiment of the present invention. The toy system according to the present invention includes a device control apparatus 10, carriages 20a and 20b, a controller 17, and a cartridge 18. The carriages 20a and 20b, which are mobile devices having a camera 24 and a magnetic sensor 26, have the same functions. The carriages 20a and 20b are hereinafter referred to as the carriages 20 unless they need to be distinguished particularly from each other. The device control apparatus 10 wirelessly controls the carriages 20. The controller 17 is an input apparatus acquiring an operation performed by a user and is connected to the device control apparatus 10 via a cable. FIG. 3 is a bottom view illustrating an example of one of the carriages 20. The carriages 20 each further include a power switch 250, a switch 222, and two wheels 254.

The device control apparatus 10 includes a processor 11, a storage section 12, a communication section 13, and an input/output section 14. The carriages 20 each include a processor 21, a storage section 22, a communication section 23, a camera 24, two motors 25, and a magnetic sensor 26. The device control apparatus 10 may be a dedicated apparatus for control or a general-purpose computer.

The processor 11 operates in accordance with a program stored in the storage section 12 and controls, for example, the communication section 13 and the input/output section 14. The processor 21 operates in accordance with a program stored in the storage section 22 and controls, for example, the communication section 23, the camera 24, and the motors 25. The above-mentioned programs are supplied on a flash memory or other computer-readable storage medium in the cartridge 18. However, the programs may alternatively be supplied through a network such as the Internet.

The storage section 12 includes a dynamic random access memory (DRAM) and a flash memory, which are built in the device control apparatus 10, and includes, for example, the flash memory in the cartridge 18. The storage section 22 includes, for example, a DRAM and a flash memory. The storage sections 12 and 22 store the above-mentioned programs. Further the storage sections 12 and 22 store information and computation results inputted, for example, from the processors 11 and 21 and the communication sections 13 and 23.

The communication sections 13 and 23 each include, for example, an integrated circuit and an antenna in order to communicate with other equipment. The communication sections 13 and 23 are capable of communicating with each other in accordance, for example, with a Bluetooth (registered trademark) protocol. Under the control of the processors 11 and 21, the communication sections 13 and 23 input information received from other apparatuses to the storage sections 12 and 22, and transmit information to the other apparatuses. It should be noted that the communication section 13 may be capable of communicating with the other apparatuses through a local area network (LAN) or other network.

The input/output section 14 includes a circuit for acquiring information from an input device such as the controller 17, and a circuit for controlling an output device such as a sound output device and an image display device. The input/output section 14 acquires an input signal from the input device and inputs information obtained by converting the acquired input signal to the processor 11 and the storage section 12. Further, under the control, for example, of the processor 11, the input/output section 14 outputs a sound to a speaker and outputs an image to a display device.

The motors 25 are what is generally called servomotors whose rotation direction, rotation amount, and rotation speed are controlled by the processor 21. One wheel 254 is assigned to each of the two motors 25. The motors 25 respectively drive the assigned wheels 254.

The camera 24 is disposed so as to capture an image of an area below a carriage 20. The camera 24 captures an image of a pattern printed, for example, on a sheet on which the carriage 20 is placed. In the present embodiment, a pattern recognizable by in the infrared frequency domain is printed, for example, on the sheet so that the camera 24 captures an image of such infrared light. Unit patterns of a predetermined size (e.g., 0.2 mm square) are arrayed in a matrix form, for example, on the sheet. Each of the unit patterns is an image obtained by encoding the coordinates of the position where the unit pattern is disposed. The carriage 20 and the device control apparatus 10 acquire the position and orientation of the carriage 20 by decoding the patterns included in the image captured by the camera 24.

The magnetic sensor 26 detects a magnetic field generated, for example, by a magnet. The magnetic sensor 26, which is what is generally called a three-axis magnetic sensor, acquires the magnetic field in the form of a three-dimensional vector. The magnetic sensor 26 may alternatively be a two-axis magnetic sensor.

FIG. 4 is a perspective view illustrating an example of an adjunct 40 and the carriage 20. The adjunct 40 is a separate toy separated from the carriage 20. Although FIG. 4 depicts only one adjunct 40, other types of the adjunct 40 also exist in reality. A plurality of adjuncts 40 may be included in the toy system. The adjunct 40 includes a pedestal 45, a hinge 43 connected to the pedestal 45, and a movable section 44 movable via the hinge 43. A shape of the adjunct 40 is not limited to the one depicted in FIG. 4. For example, some of the included adjuncts 40 may exclude the hinge 43 and the movable section 44. Protrusions 29 are formed on a top surface of the carriage 20. Engagement sections engaging with the protrusions 29 are formed on an underside of the pedestal 45. The engagement sections are, for example, recessed shape to match the protrusions 29. The magnetic sensor 26 is built in the casing of the carriage 20. In the example of FIG. 4, the magnetic sensor 26 is disposed on a back side of the top surface of the carriage 20.

Further, a magnet 41 for generating a magnetic field is embedded in the adjunct 40. The position and strength of the magnet 41 are determined so as to enable the magnetic sensor 26 to detect a magnetic field generated by the magnet 41.

The orientation of magnetic poles of the magnet 41 varies with the adjunct 40. FIG. 5A is a diagram illustrating an example of a relation between the magnetic sensor 26 and the magnetic field of the magnet 41. FIG. 5B is a diagram illustrating another example of the relation between the magnetic sensor 26 and the magnetic field of the magnet 41. The illustrations in FIGS. 5A and 5B assume that the x-axis is parallel to the direction of connecting the two wheels 254 of the carriage 20, and that the z-axis is extended in the up-down direction, and further that the y-axis is perpendicular to the x- and z-axes. FIGS. 5A and 5B depict only magnetic field lines 83 passing through the magnetic sensor 26. In the example of FIG. 5A, the two magnetic poles of the magnet 41 are lined up along the x-axis so that the magnetic sensor 26 detects a magnetic field whose x-axis negative direction component is greater than other components. Meanwhile, in the example of FIG. 5B, the two magnetic poles of the magnet 41 are lined up along the z-axis so that the magnetic sensor 26 detects a magnetic field whose z-axis negative direction component is greater than other components.

When the plurality of adjuncts 40 are of different types, the magnet 41 is attached to each of the adjuncts 40 in such a manner as to generate differently oriented magnetic fields. In a case where the adjuncts 40 engage with the carriages 20 in a predetermined posture, the magnetic field detected by the magnetic sensor 26 varies from one adjunct 40 to another. Even if the two magnetic poles are lined up along one of the x, y, and z-axes, the orientation of N and S poles can be reversed for each axis. Therefore, six different types of adjuncts 40 can be identified simply by determining the strongest component and orientation of the magnetic field. Further, a wider variety of adjuncts 40 can be identified by fine-tuning the range of orientation of the magnetic field reaching the magnetic sensor 26.

It should be noted that the magnet 41 may be a magnet sheet. In such a case, the properties and mounting position of the magnet sheet are designed in such a manner that the magnetic field outputted from the magnet sheet attached to the adjuncts 40 complies with the adjuncts 40.

Processing performed for type identification will now be described in more detail. FIG. 6 is a block diagram illustrating the functions implemented by the toy system. The toy system functionally includes a magnetic determination section 51, a carriage control section 52, and a movement detection section 53. The magnetic determination section 51, the carriage control section 52, and the movement detection section 53 are mainly implemented by allowing the processor 11 included in the device control apparatus 10 to execute a program stored in the storage section 12 for purposes of controlling the carriage 20 via the communication section 13. Further, some or all of the functions may be implemented by allowing the processor 21 included in the carriage 20 to execute a program stored in the storage section 22 for purposes of controlling the camera 24 and the magnetic sensor 26. Further, some or all of the functions may be executed by allowing the device control apparatus 10 and the carriage 20 to perform cooperative processing so as to exchange data through the communication sections 13 and 23.

Based on the orientation and magnitude of a magnetic field detected by the magnetic sensor 26, the magnetic determination section 51 determines that one of the plurality of adjuncts 40 has approached the magnetic sensor 26 and determines which of the adjuncts 40 has approached the magnetic sensor 26.

Based on operation of the motors 25 or acceleration acquired by an undepicted acceleration sensor, the movement detection section 53 detects whether or not the carriage 20 having the magnetic sensor 26 is moving.

Based on the result of determination by the magnetic determination section 51, the carriage control section 52 controls operation of the carriage 20.

FIG. 7 is a flowchart illustrating an example of processing performed by the magnetic determination section 51, the movement detection section 53, and the carriage control section 52. The processing depicted in FIG. 7 is performed after the mounting of an adjunct 40 is started by the user and before the processing, for example, of a game is performed by the carriage control section 52 through the use of the adjunct 40. The following description deals with a case where processing in the magnetic determination section 51 is performed by the device control apparatus 10. However, the processing may alternatively be performed by the carriage 20. It should be noted that a later-described continuation count is assumed to be initialized to zero before the processing.

First, the magnetic determination section 51 acquires a magnetic field measured by the magnetic sensor 26 (step S101). More specifically, the processor 11 in the device control apparatus 10 controls the carriage 20 via the communication section 13 and acquires information indicative of the orientation and strength of the magnetic field outputted from the magnetic sensor 26.

If the strength of the acquired magnetic field is smaller than a threshold strength value ("N" in step S102), the magnetic determination section 51 determines that the adjunct 40 has not approached the carriage 20, initializes the continuation count to zero (step S103), and repeats step S101 and subsequent steps.

If the strength of the acquired magnetic field is equal to or greater than the threshold strength value ("Y" in step S102), the magnetic determination section 51 determines that the adjunct 40 has approached the carriage 20 and increments the continuation count (step S104). If the continuation count is less than a threshold time value ("N" in step S105), it is possible that the adjunct 40 is being mounted. In this instance, the magnetic determination section 51 repeats step S101 and subsequent steps, and withholds its determination until the time indicated by the threshold time value elapses.

If the continuation count is equal to or more than the threshold time value ("Y" in step S105), in order to further confirm whether the adjunct 40 is mounted, the magnetic determination section 51 causes the movement detection section 53 to determine whether or not the carriage 20 is moving (step S106). In order to determine whether or not the carriage 20 is moving, the movement detection section 53 may check whether or not the motors 25 are running, check whether or not the carriage 20 is being operated by the user, or check an output from the acceleration sensor attached to the carriage 20. If it is determined that the carriage 20 is not moving ("N" in step S106), the magnetic determination section 51 drives the motors 25 to move the carriage 20 for test-run purposes (step S107). Subsequently, the magnetic determination section 51 repeats step S101 and subsequent steps.

Meanwhile, if it is determined that the carriage 20 is moving (step S106), the difference between the magnetic field measured last by the magnetic sensor 26 and the currently measured magnetic field is obtained to determine the amount of change in the magnetic field, and then a check is performed to determine whether or not the amount of change is within a predetermined acceptable range (step S108). If the amount of change in the magnetic field is outside the acceptable range ("N" in step S108), the magnetic determination section 51 determines that the adjunct 40 is wobbly and outputs an error message indicating that the adjunct 40 is not properly mounted (step S109). In this instance, the amount of change in the magnetic field may simply be the amount of change in the strength of the magnetic field or may be a vector representing the amount of magnetic field change in each component. The acceptable range may represent a state where the amount of change in the strength of the magnetic field and the magnitude of the vector are equal to or smaller than predetermined threshold values or a state where the magnitudes of all components of the vector are equal to or smaller than predetermined threshold values. Combining the operations of the magnetic sensor 26 and the carriage 20 not only makes it possible to confirm whether or not the adjunct 40 is properly mounted, but also makes it possible to identify the type of a properly mounted adjunct 40.

If the amount of change in the magnetic field is within the acceptable range ("Y" in step S108), based on the orientation of the magnetic field, the magnetic determination section 51 identifies the type of the mounted adjunct 40 from among a plurality of different types of adjuncts 40 (step S110). As a plurality of different types of adjuncts 40 exist under normal conditions, processing performed in step S110 causes the magnetic determination section 51 to determine which of the plurality of adjuncts 40 is mounted.

Subsequently, the carriage control section 52 changes the operation settings of the carriage 20 according to the identified type of adjunct 40 (step Sill). For example, the carriage control section 52 changes the operation settings as needed to specify whether the carriage 20 is to be operated by the user and whether the carriage 20 is to be operated by a game program, and then controls the movement of the carriage 20 according to the changed operation settings.

In the above example, in a case where the carriage 20 is moving, based on the magnetic field detected by the magnetic sensor 26, the magnetic determination section 51 determines whether the adjunct 40 is mounted on the carriage 20 (a state where the adjunct 40 has approached the carriage 20) and identifies the type of the mounted adjunct 40. Meanwhile, in a case where the carriage 20 is moving and a magnetic field having a strength greater than the threshold strength value is newly detected, the magnetic determination section 51 may determine that the carriage 20 is approached by the magnet 41 attached to a toy such as an obstacle, instead of the adjunct 40 mounted on the carriage 20.

As described thus far, using the magnetic field generated by the magnet 41 makes it possible to identify the type of adjunct 40 without using an integrated circuit (IC) tag or other complicated and costly device. Further, as a simple structure is employed, it is possible to provide high durability.

The posture of the movable section 44 of the adjunct 40 can be detected.

FIG. 8 is a diagram illustrating an example of a relation between the magnetic sensor 26 and the magnet 41 of the adjunct 40 according to the second embodiment. In the example of FIG. 8, an angle formed between the movable section 44 and a non-movable section 46 can be changed by using the hinge 43. Further, the magnet 41 is attached to the movable section 44. In the example of FIG. 8, it is assumed that the two magnetic poles of the magnet 41 are lined up in the y-axis direction and that the N pole is positioned forward in FIG. 8. FIG. 8 depicts only the magnetic field lines 83 passing through the magnetic sensor 26. The magnetic sensor 26 is positioned further forward of the N pole. It is assumed that the magnetic field lines 83 exiting the N pole pass through the magnetic sensor 26, reach the underside of the magnetic sensor 26, and then return to the S pole.

As is obvious from the description of the magnetic field lines 83 in FIG. 8, the xz plane component of the orientation of the magnetic field detected by the magnetic sensor 26 changes by an angle β because of an angle α by which the movable section 44 is changed from an upright state (see the broken lines). Taken from a different viewpoint, the orientation of the movable section 44 can be detected from the orientation of the magnetic field. Further, reversing the magnetic poles of the magnet 41 depicted, for example, in FIG. 8 makes it possible to identify at least two types of adjuncts 40. Further, either of the following two methods makes it possible to identify a wider variety of adjuncts 40. A first method is to limit a mobility range of the movable section 44 in such a manner that the orientations of magnetic fields detected by the magnetic sensor 26 do not overlap with each other when different types of adjuncts 40 are to be identified. A second method is to vary the magnitude of magnetic force generated by the magnet 41 from one type of adjunct 40 to another so that the strengths of magnetic fields detected by the magnetic sensor 26 do not overlap with each other.

FIG. 9 is a flowchart illustrating an example of processing performed by the magnetic determination section 51 section and the carriage control section 52. The processing depicted in FIG. 9 may be performed after the adjunct 40 is mounted by the user and while the carriage control section 52 is performing a game or other processing by using the adjunct 40. As is the case with the example of FIG. 7, the processing may be performed by the device control apparatus 10 or by the carriage 20.

First, the magnetic determination section 51 acquires a magnetic field measured by the magnetic sensor 26 (step S151). More specifically, the processor 11 in the device control apparatus 10 controls the carriage 20 via the communication section 13 and acquires information indicative of the orientation and strength of the magnetic field outputted from the magnetic sensor 26.

If the strength of the acquired magnetic field is smaller than a threshold strength value ("N" in step S152), the magnetic determination section 51 determines that the adjunct 40 is removed from the carriage 20 and outputs information indicative of the removal to the carriage control section 52 (step S153). Although not depicted, in a case where it is determined that the adjunct 40 is removed from the carriage 20, the carriage control section 52 concludes, for example, that a game is lost, and outputs a message appropriate for such a situation in order to control the movement of the carriage 20.

If the strength of the acquired magnetic field is equal to or greater than the threshold strength value ("Y" in step S152), based on at least either the orientation or strength of the magnetic field, the magnetic determination section 51 identifies the type of the mounted adjunct 40 from among a plurality of different types of adjuncts 40 (step S154). Further, the magnetic determination section 51 determines the posture of the movable section 44 of the adjunct 40 according to the orientation of the magnetic field (step S155).

Next, the carriage control section 52 controls the operation of the carriage 20 according to the identified type of adjunct 40 and the posture of the movable section 44 (step S156). For example, in a case where an angle of the movable section 44 is changed to exceed a predetermined angle, the carriage control section 52 may conclude that a game is lost because a doll is knocked down by another carriage 20 and operate the carriage 20 according to a state where the game is lost.

Here, the movable section 44 need not always be movable via the hinge 43. FIG. 10 is a diagram illustrating another example of the adjunct 40 and the carriage 20. In the example of FIG. 10, the adjunct 40 engaging with the carriage 20 includes a knob 47. The knob 47 rotates around a shaft 48 and is equivalent to the movable section 44. The shaft 48 is extended in a vertical direction with respect to the top surface of the carriage 20 which is positioned above the magnetic sensor 26. The magnet 41 is positioned so as not to overlap with the rotation axis of the knob 47. In the example of FIG. 10, the magnetic poles of the magnet 41 are lined up in the up-down direction. In the example of FIG. 10, the magnetic determination section 51 identifies the type of adjunct 40 according to at least either the orientation or strength of the magnetic field and determines an angle of the knob 47 according to the orientation of the magnetic field. Further, a trailer 49 rotatable by the shaft 48 may be coupled instead of the knob 47.

As described above, using the magnetic sensor 26 makes it possible to identify not only the type of adjunct 40 but also the posture of the movable section 44 including the knob 47. Further, changing the operation of the carriage 20 according to the identified posture makes it possible to provide a wider variety of operations. For example, it is possible to prevent the trailer 49 from abnormally operating or colliding with an obstacle.

### [Third Embodiment]

A third embodiment of the present invention will now be described. The third embodiment differs from the first and second embodiments in that the toy system is able to detect the approach and collision of an object not mounted on the carriage 20 and the direction in which the object exists. The following description mainly deals with the difference from the first and second embodiments.

FIG. 11 is a diagram illustrating an example of a relation between an external object and the carriage 20 according to the third embodiment. FIG. 11 is a plan view. In the example of FIG. 11, a carriage 20d and an object 81 are disposed apart from each other. A magnet 42 is attached to the object 81.

The two magnetic poles of the magnet 42 are lined up in the up-down direction. The N pole is on the upper side, and the S pole is on the lower side. The magnetic field lines 83 indicated by the solid lines in FIG. 11 exit the N pole, pass above a sheet on which the carriage 20d is disposed, and reach the magnetic sensor 26. The magnetic field lines 83 indicated by broken lines leave the magnetic sensor 26, pass below the sheet, and return to the S pole.

In the example of FIG. 11, the strength of the magnetic field increases with a decrease in the distance to the magnet 42 of the object 81. Further, in FIG. 11, the direction of the magnet 42 as viewed from a carriage 20e is different from the direction of the magnet 42 as viewed from the carriage 20d. However, as regards both the carriage 20d and the carriage 20e, the orientation of components along the plane of the magnetic field lines 83 reaching the magnetic sensor 26 is opposite to the direction in which the magnet 42 exists. It should be noted that, in a case where the magnetic poles of the magnet 42 are reversed, the orientation of components along the plane of the magnetic field lines 26 is the direction in which the magnet 42 exists. This signifies that the orientation of the magnetic field detected by the polarity magnetic sensor 26 of the magnet 42 indicates the direction in which the object 81 exists. The above-described configuration enables the toy system to determine the approach to, and collision with, the object 81 based on the strength of the magnetic field detected by the magnetic sensor 26, and determine the direction of the object 81 based on the orientation of the magnetic field.

FIG. 12 is a flowchart illustrating an example of processing performed by the magnetic determination section 51. As is the case with the example of FIG. 7, the processing may be performed by the device control apparatus 10 or by the carriage 20. The processing depicted in FIG. 12 is repeatedly performed when the carriage 20 is operating.

First, the magnetic determination section 51 acquires a magnetic field measured by the magnetic sensor 26 (step S201). More specifically, the processor 11 in the device control apparatus 10 controls the carriage 20 via the communication section 13 and acquires information indicative of the orientation and strength of the magnetic field outputted from the magnetic sensor 26. Further, in order to make temporal changes in the magnetic field verifiable, the magnetic determination section 51 causes the storage section 12 to store the measured magnetic field (step S202).

If the strength of the acquired magnetic field is smaller than a threshold approach value ("N" in step S203), the magnetic determination section 51 determines that the object 81 is undetected and outputs information indicative of the undetection to the carriage control section 52 (step S204). The threshold approach value is a threshold value for determining whether or not the carriage 20 has approached the object 81 and is greater than a value indicative of a strength of geomagnetism detected by the magnetic sensor 26. For example, when the distance between the magnet 42 and the magnetic sensor 26 of the carriage 20 is approximately 5 cm, a magnetic field having a magnitude greater than the threshold approach value is detected.

If the strength of the acquired magnetic field is equal to or greater than the threshold approach value ("Y" in step S203), the magnetic determination section 51 identifies, based on the orientation of the magnetic field, the direction in which the object 81 exists (step S205). More specifically, based on the planar components (xy components) of the measured magnetic field, the magnetic determination section 51 identifies the direction in which the object 81 exists. Next, the magnetic determination section 51 determines whether or not the strength of the magnetic field is equal to or greater than a threshold contact value (step S206). The threshold contact value is a threshold value for determining whether or not the carriage 20 is contacted and is greater than the threshold approach value.

If the strength of the magnetic field is equal to or greater than the threshold contact value ("Y" in step S206), the magnetic determination section 51 determines that the carriage 20 is in contact with the object 81 and outputs information indicative of the contact and the identified direction of the object 81 to the carriage control section 52 (step S207). Meanwhile, if the strength of the magnetic field is smaller than the threshold contact value ("N" in step S206), the magnetic determination section 51 determines whether or not the previous strength of the magnetic field is equal to or greater than the threshold contact value (step S208). It should be noted that, in a case where the strength of the magnetic field is smaller than the threshold contact value, the carriage 20 has approached the object 81.

If the previous strength of the magnetic field is smaller than the threshold contact value ("N" in step S208), the magnetic determination section 51 merely determines that the carriage 20 has approached the object 81 and outputs information indicative of the approach and the identified direction of the object 81 to the carriage control section 52 (step S209). Meanwhile, if the previous strength of the magnetic field is equal to or greater than the threshold contact value ("Y" in step S208), the magnetic determination section 51 determines that the object 81 is approached by the carriage 20 and then has rebounded after coming into contact with the carriage 20 and outputs information indicative of the rebound and the identified direction of the object 81 to the carriage control section 52 (step S210).

The carriage control section 52 controls the operation of the carriage 20 according to the information obtained from the magnetic determination section 51. For example, the carriage control section 52 may operate the carriage 20 according to a user-specified direction in a case where the object 81 is undetected, move the carriage 20 toward the object 81 in a case where it is merely determined that the carriage 20 has approached the object 81, and stop the movement of the carriage 20 in a case where it is determined that the carriage 20 has come into contact with the object 81. Further, in a case where it is determined that the object 81 has rebounded, the carriage control section 52 may cause the carriage 20 to perform a predetermined operation (e.g., an operation indicative of a troubled state) in order to indicate that the object 81 has rebounded. Performing such an operation makes it possible, for example, to implement a treasure hunting game and a motion performed by an animal (equivalent to the carriage 20) to find and approach a bait (equivalent to the object 81).

Here, a game like tag can be implemented by using the magnet 42 and two carriages 20f and 20g. In this case, the carriage 20g to which the magnet 42 is attached is used instead of the object 81. FIG. 13 is a diagram illustrating an example of the carriage 20f and other carriage 20g. In the example of FIG. 13, a mat 31f on which the carriage 20f is disposed is different from a mat 31g on which the carriage 20g is disposed. Further, the mat 31f is disposed above the mat 31g. The carriage 20f is operated by one user, and the carriage 20g is operated by another user or by a programmed logic.

In a case where the magnetic determination section 51 determines that the magnet 42 has approached the carriage 20f, for example, the carriage control section 52 determines that the carriage 20f is caught, and then causes the carriage 20f to perform an operation indicative of the capture. This makes it easy to determine that the carriage 20f and the carriage 20g have approached each other.

Further, the magnet 42 may be attached to a tip of an adjunct 80 that is to be mounted on the other carriage 20g. FIG. 14 is a diagram illustrating another example of the carriage 20f and other carriage 20g. In the example of FIG. 14, the carriage 20f and the carriage 20g are disposed on the same sheet. In the example of FIG. 14, the adjunct 80 is equivalent to the object 81. The above-described configuration enables the magnetic determination section 51 to determine whether the adjunct 80 is contacted. Therefore, when, for example, the carriage control section 52 operates the carriages 20f and 20g in such a manner as to avoid severe collision, it is possible to prevent the carriages 20f and 20g from toppling over. Further, the carriages 20 can perform a wider variety of operations when the carriages 20f and 20g move in a predetermined manner in a case where the approach or the contact is determined.

## Claims

1. A toy system comprising:
a magnetic sensor (26) that detects an orientation and a magnitude of a magnetic field;
plurality of separate toys (40); and
a determination section (51) that, based on an output from the magnetic sensor (26), determines that one of the plurality of separate toys (40) having magnetic field generation means (41) has approached the magnetic sensor (26) and determines which of the separate toys (40) has approached the magnetic sensor (26), the magnetic field generation means (41) being mounted individually on the separate toys (40) in such a manner as to generate differently oriented magnetic fields in a standard posture,
wherein the magnetic sensor (26) is built in a casing (20), and the casing (20) includes a to-be-engaged section (29) with which an engagement section disposed on each of the separate toys (40) engages,
**characterized in that** the separate toys (40) each include a movable section (44) for changing an orientation relative to the engagement section,
the magnetic field generation means (41) is disposed on the movable section (44), and
the determination section (51) determines the orientation of the movable section (44) based on an output from the magnetic sensor (26).

2. The toy system according to claim 1,
wherein, in a case where a magnetic field having a magnitude equal to or greater than a threshold value and oriented in a predetermined direction is continuously detected for a predetermined period of time, the determination section (51) determines that one of the separate toys (40) has approached the magnetic sensor (26) and determines which of the separate toys (40) has approached the magnetic sensor (26).

3. The toy system according to claim 2, further comprising:
movement detection means (53) for detecting whether or not the magnetic sensor (26) is moving,
wherein, in a case where the magnetic sensor (26) is moving, the determination section (51) determines that one of the separate toys (40) has approached the magnetic sensor (26) and determines which of the separate toys (40) has approached the magnetic sensor (26).

4. The toy system according to any one of claims 1 to 3, further comprising:
the casing (20), wherein the magnetic sensor (26)is disposed on the casing (20) and
the determination section (51) determines, based on the output from the magnetic sensor (26), that a separate toy (40) separated from the casing (20) in which magnetic field generation means (41) for generating a magnetic field is mounted has come into contact with or approached the casing (20) .

5. The toy system according to claim 4,
Wherein, in a case where the magnetic sensor (26) detects a magnetic field having a magnitude equal to or greater than a predetermined first threshold value, the determination section (51) determines that the separate toy (40) has come into contact with the casing (20), and,
in a case where the magnetic sensor (26) detects a magnetic field having a magnitude equal to or greater than a second threshold value which is smaller than the first threshold value, the determination section (51) determines that the separate toy (40) has approached the casing (20), the second threshold value being greater than a value of a magnitude of geomagnetism detected by the magnetic sensor (26).

6. The toy system according to claim 4 or 5,
wherein the determination section (51) determines, based on the orientation of a magnetic field detected by the magnetic sensor (26), a direction of the separate toy (40) when the separate toy (40) comes into contact with or approaches the casing (20).

7. The toy system according to any one of claims 4 to 6, Wherein the determination section (51) determines, based on changes in the magnitude of a magnetic field detected by the magnetic sensor (26), that the separate toy (40) has rebounded after hitting the casing (20).

8. A separate toy assessment method comprising the steps of:
Acquiring an orientation and a magnitude of a magnetic field detected by a magnetic sensor (26); and,
based on the acquired orientation and magnitude of the magnetic field, determining that one of a plurality of separate toys (40) having magnetic field generation means (41) has approached the magnetic sensor (26) and determining which of the separate toys (40) has approached the magnetic sensor (26), the magnetic field generation means (41) being mounted on the separate toys (40) in such a manner as to generate differently oriented magnetic fields in a standard posture, wherein the magnetic sensor (26) is built in a casing (20), and the casing (20) includes a to-be-engaged section (29) with which an engagement section disposed on each of the separate toys (40) engages, the separate toys (40) each include a movable section (44) for changing an orientation relative to the engagement section, the magnetic field generation means (41) is disposed on the movable section (44), and the orientation of the movable section (44) is determined based on an output from the magnetic sensor (26).

9. A program causing a computer to function as:
means for acquiring an orientation and a magnitude of a magnetic field detected by a magnetic sensor (26); and,
based on the acquired orientation and magnitude of the magnetic field, means for determining that one of a plurality of separate toys (40) having magnetic field generation means (41) has approached the magnetic sensor (26) and determining which of the separate toys (40) has approached the magnetic sensor (26), the magnetic field generation means (41) being mounted on the separate toys (40) in such a manner as to generate differently oriented magnetic fields in a standard posture, wherein the magnetic sensor (26) is built in a casing (20), and the casing (20) includes a to-be-engaged section (29) with which an engagement section disposed on each of the separate toys (40) engages, the separate toys (40) each include a movable section (44) for changing an orientation relative to the engagement section, the magnetic field generation means (41) is disposed on the movable section (44), and the orientation of the movable section (44) is determined based on an output from the magnetic sensor (26).

## Patentansprüche

1. Spielzeugsystem, umfassend:
einen Magnetsensor (26), der eine Ausrichtung und eine Stärke eines Magnetfelds erkennt;
eine Vielzahl von separaten Spielzeugen (40); und
einen Ermittlungsabschnitt (51), der basierend auf einer Ausgabe aus dem Magnetsensor (26) feststellt, dass sich eines der Vielzahl von separaten Spielzeugen (40), die Magnetfelderzeugungsmittel (41) aufweisen, dem Magnetsensor (26) genähert hat, und ermittelt, welches der separaten Spielzeuge (40) sich dem Magnetsensor (26) genähert hat, wobei die Magnetfelderzeugungsmittel (41) einzeln an den separaten Spielzeugen (40) derart angebracht sind, dass sie in einer Standardhaltung unterschiedlich ausgerichtete Magnetfelder erzeugen,
wobei der Magnetsensor (26) in ein Gehäuse (20) eingebaut ist und das Gehäuse (20) einen zum Eingreifen vorgesehenen Abschnitt (29) aufweist, in den ein an jedem der separaten Spielzeuge (40) angeordneter Eingriffsabschnitt eingreift,
**dadurch gekennzeichnet, dass** die separaten Spielzeuge (40) jeweils einen beweglichen Abschnitt (44) zum Ändern einer Ausrichtung im Verhältnis zu dem Eingriffsabschnitt einschließen,
die Magnetfelderzeugungsmittel (41) an dem beweglichen Abschnitt (44) angeordnet sind und
der Ermittlungsabschnitt (51) die Ausrichtung des beweglichen Abschnitts (44) basierend auf einer Ausgabe aus dem Magnetsensor (26) ermittelt.

2. Spielzeugsystem nach Anspruch 1,
wobei wenn ein Magnetfeld, das eine Stärke aufweist, die gleich oder größer als ein Schwellenwert ist und in einer vorgegebenen Richtung ausgerichtet ist, über einen vorgegebenen Zeitraum kontinuierlich erfasst wird, der Ermittlungsabschnitt (51) feststellt, dass sich eines der separaten Spielzeuge (40) dem Magnetsensor (26) genähert hat, und ermittelt, welches der separaten Spielzeuge (40) sich dem Magnetsensor (26) genähert hat.

3. Spielzeugsystem nach Anspruch 2, ferner umfassend:
Bewegungserfassungsmittel (53) zum Erfassen, ob sich der Magnetsensor (26) bewegt oder nicht,
wobei wenn sich der Magnetsensor (26) bewegt, der Ermittlungsabschnitt (51) feststellt, dass sich eines der separaten Spielzeuge (40) dem Magnetsensor (26) genähert hat, und ermittelt, welches der separaten Spielzeuge (40) sich dem Magnetsensor (26) genähert hat.

4. Spielzeugsystem nach einem der Ansprüche 1 bis 3, ferner umfassend:
das Gehäuse (20), wobei der Magnetsensor (26) an dem Gehäuse (20) angeordnet ist und
der Ermittlungsabschnitt (51) basierend auf der Ausgabe aus dem Magnetsensor (26) feststellt, dass ein separates Spielzeug (40), das von dem Gehäuse (20) getrennt ist, in welchem Magnetfelderzeugungsmittel (41) zum Erzeugen eines Magnetfelds angebracht sind, mit dem Gehäuse (20) in Kontakt gekommen ist oder sich diesem genähert hat.

5. Spielzeugsystem nach Anspruch 4,
wobei, wenn der Magnetsensor (26) ein Magnetfeld erfasst, das eine Stärke aufweist, die gleich oder größer als ein vorgegebener erster Schwellenwert ist, der Ermittlungsabschnitt (51) feststellt, dass das separate Spielzeug (40) mit dem Gehäuse (20) in Kontakt gekommen ist, und
wenn der Magnetsensor (26) ein Magnetfeld erfasst, das eine Stärke aufweist, die gleich oder größer als ein zweiter Schwellenwert ist, der kleiner als der erste Schwellenwert ist, der Ermittlungsabschnitt (51) feststellt, dass sich das separate Spielzeug (40) dem Gehäuse (20) genähert hat, wobei der zweite Schwellenwert größer als ein Wert einer Stärke von durch den Magnetsensor (26) erfasstem Geomagnetismus ist.

6. Spielzeugsystem nach Anspruch 4 oder 5,
wobei der Ermittlungsabschnitt (51) basierend auf der Ausrichtung eines durch den Magnetsensor (26) erfassten Magnetfelds eine Richtung des separaten Spielzeugs (40) ermittelt, wenn das separate Spielzeug (40) mit dem Gehäuse (20) in Kontakt kommt oder sich diesem nähert.

7. Spielzeugsystem nach einem der Ansprüche 4 bis 6,
wobei der Ermittlungsabschnitt (51) basierend auf Änderungen der Stärke eines durch den Magnetsensor (26) erfassten Magnetfelds feststellt, dass das separate Spielzeug (40) nach dem Auftreffen auf das Gehäuse (20) zurückgeprallt ist.

8. Verfahren zum Bewerten separater Spielzeuge, wobei das Verfahren die Schritte umfasst:
Erfassen einer Ausrichtung und einer Stärke eines durch einen Magnetsensor (26) erfassten Magnetfelds; und
basierend auf der erfassten Ausrichtung und Stärke des Magnetfelds, Feststellen, dass sich eines einer Vielzahl von separaten Spielzeugen (40), die Magnetfelderzeugungsmittel (41) aufweisen, dem Magnetsensor (26) genähert hat, und Ermitteln, welches der separaten Spielzeuge (40) sich dem Magnetsensor (26) genähert hat, wobei die Magnetfelderzeugungsmittel (41) derart an den separaten Spielzeugen (40) angebracht sind, dass sie in einer Standardhaltung unterschiedlich ausgerichtete Magnetfelder erzeugen, wobei der Magnetsensor (26) in ein Gehäuse (20) eingebaut ist und das Gehäuse (20) einen zum Eingreifen vorgesehenen Abschnitt (29) einschließt, mit dem ein an jedem der separaten Spielzeuge (40) angeordneter Eingriffsabschnitt in Eingriff kommt, wobei die separaten Spielzeuge (40) jeweils einen beweglichen Abschnitt (44) zum Ändern einer Ausrichtung im Verhältnis zu dem Eingriffsabschnitt einschließen, die Magnetfelderzeugungsmittel (41) an dem beweglichen Abschnitt (44) angeordnet sind und die Ausrichtung des beweglichen Abschnitts (44) basierend auf einer Ausgabe aus dem Magnetsensor (26) ermittelt wird.

9. Programm, das einen Computer veranlasst, zu funktionieren als:
Mittel zum Erfassen einer Ausrichtung und einer Stärke eines durch einen Magnetsensor (26) erfassten Magnetfelds; und, basierend auf der erfassten Ausrichtung und Stärke des Magnetfelds, als Mittel zum Feststellen, dass sich eines einer Vielzahl von separaten Spielzeugen (40), die Magnetfelderzeugungsmittel (41) aufweisen, dem Magnetsensor (26) genähert hat, und Ermitteln, welches der separaten Spielzeuge (40) sich dem Magnetsensor (26) genähert hat, wobei die Magnetfelderzeugungsmittel (41) derart an den separaten Spielzeugen (40) angebracht sind, dass sie in einer Standardhaltung unterschiedlich ausgerichtete Magnetfelder erzeugen, wobei der Magnetsensor (26) in ein Gehäuse (20) eingebaut ist und das Gehäuse (20) einen zum Eingreifen vorgesehenen Abschnitt (29) einschließt, mit dem ein an jedem der separaten Spielzeuge (40) angeordneter Eingriffsabschnitt in Eingriff kommt, wobei die separaten Spielzeuge (40) jeweils einen beweglichen Abschnitt (44) zum Ändern einer Ausrichtung im Verhältnis zu dem Eingriffsabschnitt einschließen, die Magnetfelderzeugungsmittel (41) an dem beweglichen Abschnitt (44) angeordnet sind und die Ausrichtung des beweglichen Abschnitts (44) basierend auf einer Ausgabe aus dem Magnetsensor (26) ermittelt wird.

## Revendications

1. Système de jouet comprenant :
un capteur magnétique (26) qui détecte une orientation et une grandeur d'un champ magnétique ;
une pluralité de jouets séparés (40) ; et
une section de détermination (51) qui, en fonction d'une sortie provenant du capteur magnétique (26), détermine que l'un parmi la pluralité de jouets séparés (40) ayant un moyen de génération de champ magnétique (41) s'est rapproché du capteur magnétique (26) et détermine celui des jouets séparés (40) qui s'est rapproché du capteur magnétique (26), le moyen de génération de champ magnétique (41) étant monté individuellement sur les jouets séparés (40) de telle sorte que des champs magnétiques orientés différemment sont générés dans une posture standard,
dans lequel le capteur magnétique (26) est construit dans un boîtier (20), et le boîtier (20) comporte une section à mettre en prise (29) avec laquelle une section de mise en prise disposée sur chacun des jouets séparés (40) vient en prise,
**caractérisé en ce que** les jouets séparés (40) comportent chacun une section mobile (44) permettant de changer une orientation par rapport à la section de mise en prise,
le moyen de génération de champ magnétique (41) est disposé sur la section mobile (44), et
la section de détermination (51) détermine l'orientation de la section mobile (44) en fonction d'une sortie provenant du capteur magnétique (26).

2. Système de jouet selon la revendication 1,
dans lequel, dans un cas où un champ magnétique ayant une grandeur égale ou supérieure à une valeur seuil et orienté dans une direction prédéterminée est détecté de façon continue pendant un laps de temps prédéterminé, la section de détermination (51) détermine que l'un des jouets séparés (40) s'est rapproché du capteur magnétique (26) et détermine celui des jouets séparés (40) qui s'est rapproché du capteur magnétique (26).

3. Système de jouet selon la revendication 2, comprenant en outre :
un moyen de détection de déplacement (53) permettant de détecter si le capteur magnétique (26) se déplace ou non,
dans lequel, dans un cas où le capteur magnétique (26) se déplace, la section de détermination (51) détermine que l'un des jouets séparés (40) s'est rapproché du capteur magnétique (26) et détermine celui des jouets séparés (40) qui s'est rapproché du capteur magnétique (26).

4. Système de jouet selon l'une quelconque des revendications 1 à 3, comprenant en outre :
le boîtier (20), dans lequel le capteur magnétique (26) est disposé sur le boîtier (20) et
la section de détermination (51) détermine, en fonction de la sortie provenant du capteur magnétique (26), qu'un jouet séparé (40) qui est séparé du boîtier (20) dans lequel un moyen de génération de champ magnétique (41) permettant de générer un champ magnétique est monté est venu en contact avec ou s'est rapproché du boîtier (20).

5. Système de jouet selon la revendication 4,
dans lequel, dans un cas où le capteur magnétique (26) détecte un champ magnétique ayant une grandeur égale ou supérieure à une première valeur seuil prédéterminée, la section de détermination (51) détermine que le jouet séparé (40) est venu en contact avec le boîtier (20), et,
dans un cas où le capteur magnétique (26) détecte un champ magnétique ayant une grandeur égale ou supérieure à une seconde valeur seuil qui est plus petite que la première valeur seuil, la section de détermination (51) détermine que le jouet séparé (40) s'est rapproché du boîtier (20), la seconde valeur seuil étant supérieure à une valeur d'une grandeur de géomagnétisme détectée par le capteur magnétique (26).

6. Système de jouet selon la revendication 4 ou 5,
dans lequel la section de détermination (51) détermine, en fonction de l'orientation d'un champ magnétique détecté par le capteur magnétique (26), une direction du jouet séparé (40) lorsque le jouet séparé (40) vient en contact avec ou se rapproche du boîtier (20).

7. Système de jouet selon l'une quelconque des revendications 4 à 6,
dans lequel la section de détermination (51) détermine, en fonction de changements dans la grandeur d'un champ magnétique détecté par le capteur magnétique (26), que le jouet séparé (40) a rebondi après avoir heurté le boîtier (20).

8. Procédé d'évaluation de jouet séparé comprenant les étapes consistant à :
acquérir une orientation et une grandeur d'un champ magnétique détecté par un capteur magnétique (26) ; et,
en fonction de l'orientation et de la grandeur acquises du champ magnétique, déterminer que l'un parmi une pluralité de jouets séparés (40) ayant un moyen de génération de champ magnétique (41) s'est rapproché du capteur magnétique (26) et déterminer celui des jouets séparés (40) qui s'est rapproché du capteur magnétique (26), le moyen de génération de champ magnétique (41) étant monté sur les jouets séparés (40) de façon à générer des champs magnétiques orientés différemment dans une posture standard, dans lequel le capteur magnétique (26) est construit dans un boîtier (20), et le boîtier (20) comporte une section à mettre en prise (29) avec laquelle une section de mise en prise disposée sur chacun des jouets séparés (40) vient en prise, les jouets séparés (40) comportent chacun une section mobile (44) permettant de changer une orientation par rapport à la section de mise en prise, le moyen de génération de champ magnétique (41) est disposé sur la section mobile (44), et l'orientation de la section mobile (44) est déterminée en fonction d'une sortie provenant du capteur magnétique (26).

9. Programme amenant un ordinateur à fonctionner en tant que :
moyen permettant d'acquérir une orientation et une grandeur d'un champ magnétique détecté par un capteur magnétique (26) ; et, en fonction de l'orientation et de la grandeur acquises du champ magnétique, moyen permettant de déterminer que l'un parmi une pluralité de jouets séparés (40) ayant un moyen de génération de champ magnétique (41) s'est rapproché du capteur magnétique (26) et déterminer celui des jouets séparés (40) qui s'est rapproché du capteur magnétique (26), le moyen de génération de champ magnétique (41) étant monté sur les jouets séparés (40) de façon à générer des champs magnétiques orientés différemment dans une posture standard, dans lequel le capteur magnétique (26) est construit dans un boîtier (20), et le boîtier (20) comporte une section à mettre en prise (29) avec laquelle une section de mise en prise disposée sur chacun des jouets séparés (40) vient en prise, les jouets séparés (40) comportent chacun une section mobile (44) permettant de changer une orientation par rapport à la section de mise en prise, le moyen de génération de champ magnétique (41) est disposé sur la section mobile (44), et l'orientation de la section mobile (44) est déterminée en fonction d'une sortie provenant du capteur magnétique (26).
